# EUROPÄISCHE PATENTSCHRIFT

(11) **EP 1 872 034 B1**
(45) Veröffentlichungstag und Bekanntmachung des Hinweises auf die Patenterteilung: **10.06.2009**
(21) Anmeldenummer: 06722791.8
(22) Anmeldetag: 13.04.2006
(51) Int. Cl.: F16J 15/32

(54) **RADIALWELLENDICHTRING**
RADIAL SHAFT SEALING RING
BAGUE D'ETANCHEITE D'ARBRE AXIAL

(30) Priorität: 22.04.2005 DE 202005006553 U
(43) Veröffentlichungstag der Anmeldung: 02.01.2008
(73) Patentinhaber: VR Dichtungen GmbH, 52531 Übach-Palenberg (DE)
(72) Erfinder: KREUTZER, Siegmar, NL-6418 KK Heerlen (NL)
(74) Vertreter: Stachow, Ernst-Walther
(86) Internationale Anmeldenummer: PCT/DE2006/000661
(87) Internationale Veröffentlichungsnummer: WO 2006/111137

(56) Entgegenhaltungen:
- DE-A- 19 841 123
- DE-U- 20 115 033

## Beschreibung

Die Erfindung betrifft einen Radialwellendichtring, bestehend aus einem Membrankörper und einem Stützkörper, an dem der Membrankörper befestigt ist, wobei am Stützkörper ein Zentrierteil mit einem radial außen liegenden Rand angeordnet ist, der vom Membrankörper nicht überdeckt ist, der Membrankörper an seinem radial innen liegenden Ende eine vom Stützkörper wegweisende schräg gestellte Dichtlippe aufweist und der Stützkörper eine axiale Bohrung für eine Welle und, der Dichtlippe gegenüberliegend, eine zur Wandung der Bohrung geneigte Stützfläche aufweist.

Radialwellendichtungen haben allgemein die Aufgabe, Wellendurchführungen abzudichten und dabei Medienströmungen höheren Druckes in Räume niedrigeren Druckes zu verhindern. Dies ist oft mit den Anforderungen hoher Drehzahlen der Wellen, hoher Temperaturen des abzudichtenden Mediums, chemischer Beständigkeit und hoher Lebensdauern verbunden.

Radialwellendichtringe der eingangs genannten Art sind durch die DE 198 41 123 A1 bekannt. Das in dieser Druckschrift offenbarte Zentrierteil des Stützkörpers, das zum Zentrieren des Stützkörpers in Bezug auf das Lagergehäuse dient, ist beim Einbau des Radialwellendichtringes in ein Lagergehäuse an der Innenseite des Lagergehäuses mit einer sehr geringen Spielpassung anlegbar. Durch das Anlegen des zylinderförmigen äußeren Randes des Zentrierteils kann eine in Bezug auf die Wellenachse genaue mittige Anordnung des Stützkörpers im Lagergehäuse erreicht werden. Dadurch kann der Dichtspalt zwischen dem Stützkörper und der Welle sehr gering gehalten werden.

Ein besonderes Einsatzgebiet für Radialwellendichtungen sind Klimakompressoren, wobei das in diesen Kompressoren verwendete Kältemittel spezielle Anforderungen an die Radialwellendichtung stellt. Während früher sogenannte Halone/Halogene als Kältemittel eingesetzt wurden, wird heute aus Gründen der Umweltverträglichkeit und aufgrund günstigerer thermodynamischer Eigenschaften, die unter anderem eine bessere Kühlleistung möglich machen, stattdessen CO₂ als Trägergas verwendet. CO₂ hat jedoch die Eigenschaft, im Betriebstemperaturbereich und -Druckbereich der Kompressoren von -30C° bis 150C° unterschiedliche Aggregatzustände und große Ausdehnungen zu haben. Bei diesem Kältemittel ist von Druckdifferenzen von bis zu 90 bar auszugehen. Darüber hinaus sind die Diffusionseigenschaften von CO₂, das mit einer Ölmischung im abzudichtenden Raum unter sehr hohem Druck auf den Radialwellendichtring einwirkt, zu berücksichtigen.

Der Einsatz eines unter hohem Druck stehenden CO₂-Öl-Gemischs in Klimakompressoren erfordert eine sehr hohe Gasdichtheit sowohl zwischen dem Stützkörper bzw. Zentrierteil und dem Lagergehäuse als auch zwischen dem Radialwellendichtring und der Welle.

Der vorliegenden Erfindung liegt daher die Aufgabe zugrunde, einen Radialwellendichtring bereitzustellen, der insbesondere den Anforderungen eines CO₂ enthaltenden Druckmediums in optimaler Weise entspricht.

Die Aufgabe wird erfindungsgemäß dadurch gelöst, dass bei einem Radialwellendichtring der eingangs genannten Art das Zentrierteil beim Einbau des Radialwellendichtrings in ein Lagergehäuse an der Innenseite des Lagergehäuses mit einer Presspassung anlegbar ist und der Winkel zwischen der Stützfläche und der Wandung der Bohrung des Stützkörpers, in einer die Achse des Radialwellendichtrings enthaltenden, zentralen Ebene liegend, zwischen 45° und 55° beträgt.

Es hat sich herausgestellt, dass aufgrund der Presspassung des Stützkörpers bzw. Zentrierteils, das nicht vom Membrankörper überzogen ist, und dem Lagergehäuse durch die metallische Abdichtung eine sehr hohe Gasdichtheit zwischen dem Radialwellendichtring und dem Lagergehäuse erreicht wird. Das durch den Membrankörper diffundierende CO₂ kann aufgrund der metallischen Abdichtung nur in einem äußerst geringen Maße, das weit unter allen dafür existierenden Normen liegt, zwischen den Radialwellendichtring und dem Lagergehäuse entweichen.

Weiterhin hat sich herausgestellt, dass ein Anstellwinkel der Stützfläche des Stützkörpers der zwischen 45° und 55° liegt, eine optimale Druckunterstützung der Dichtlippe des Membrankörpers gewährleistet. Dadurch ergibt sich ein relativ ungestörtes tribologisches System mit geringstem Reibungswiderstand bei bester Dichtheit über den gesamten Drehzahl- und Druckbereich, z.B. beim Betrieb von Kompressoren.

Bei einer bevorzugten Weiterbildung der Erfindung liegt der Anstellwinkel der Stützfläche des Stützkörpers zwischen 48° und 52°.

In einer idealen Ausführung der Erfindung liegt der Anstellwinkel zwischen 49° und 51°.

Es hat sich weiterhin herausgestellt, dass eine äußerst geringe Spaltextrusion des elastomeren Materials des Membrankörpers in den Dichtspalt zwischen Stützkörper und Welle dadurch erreicht wird, dass der den Übergang zwischen der Stützfläche und der Wandung der Bohrung des Stützkörpers bildende Radius, in einer die Achse des Radialwellendichtrings enthaltenden, zentralen Ebene liegend, zwischen 0,1 und 0,3 mm beträgt. Als günstigste Spaltbreite kann dabei von einer Breite zwischen 0,01 und 0,05 mm, vorzugsweise zwischen 0,02 und 0,04 mm, ausgegangen werden. Im Eintrittsbereich des Dichtspaltes zwischen der Stützfläche des Stützkörpers und der Welle kommt es insbesondere bei einem aus Öl und CO₂ bestehenden Druckmedium zu einer hohen Materialverdichtung des elastomeren Materials des Membrankörpers, ohne dass die Gefahr eines in den Dichtspalt fließenden und womöglich abreißenden Materials besteht. Dies impliziert eine hohe Gasdichtheit zwischen dem Radialwellendichtring und der Welle.

Vorzugsweise beträgt der Radius des Übergangs zwischen der Stützfläche und der Bohrungswandung des Stützkörpers zwischen 0,1 und 0,25 mm. Als ideal kann ein Radius zwischen 0,1 und 0,2 angesehen werden.

In einer vorteilhaften Weiterbildung der Erfindung weist der aus einem elastomeren Material bestehende Membrankörper einen Füllgrad an darin eingebetteten MOS₂-Partikeln zwischen 3 % und 7 % auf.

Vorzugsweise beträgt der Füllgrad 3 % bis 5 %.

Es hat sich herausgestellt, dass ein solcher relativ geringer Füllgrad ein Ausreißen der Schmiermittelteilchen aus der Dichtlippe des Membrankörpers insbesondere bei hohen Drehzahlen der Kompressoren weitestgehend verhindert. Die Schmiermittelteilchen führen zu einem Aufschmieren der Dichtspur auf der Welle und beeinträchtigen die Gasdichtheit zwischen dem Radialwellendichtring und der Welle.

Bei einer weiteren vorteilhaften Ausbildung der Erfindung besteht der Membrankörper aus einem hart-elastomeren Material mit einer Shore-A-Härte zwischen 85° und 95°.

Bevorzugt beträgt die Shore-Härte des Membrankörpers 90° bis 95°.

Durch das hart-elastomere Material des Membrankörpers wird die Torsionsspannung bzw. der Torsionwinkel des Membrankörpers bei hohen Drehzahlen der Welle verringert, so dass auch der Verschleiß des Membrankörpers vermindert wird.

Der Membrankörper ist bevorzugt auf den Stützkörper aufgezogen, so dass er mit einer Vorspannung an diesem anliegt.

Dabei ist es zweckmäßig, dass der Membrankörper in eine an der radialen Außenseite des Stützkörpers angeordnete Nut eingreift.

In einer bevorzugten Ausführung der Erfindung ist das Zentrierteil des Stützkörpers einstückig mit diesem ausgebildet.

Um eine optimale Präzision des Innen- bzw. Außenradius des Stützkörpers bzw. Zentrierteils zu gewährleisten, können der Stützkörper und das Zentrierteil als ein einstückiges Metalldrehteil ausgebildet sein.

Weiterhin kann der Stützkörper an der vom Membrankörper abgewandten Stirnseite eine radial nach innen offene Ausnehmung aufweisen. Die Ausnehmung ist bevorzugt als Eindrehung des Stützkörpers ausgebildet und dient hinter der Druckabstützung entweder als Schmierkammer für die Dichtlippe oder bei Hintereinander angeordneten Dichtungen als Freiraum für die schräggestellte Dichtlippe der benachbarten Dichtung.

In einer bevorzugten Weiterbildung der Erfindung geht der Stützkörper an der vom Membrankörper abgewandten Stirnseite in einen axial nach außen gekröpften, radial außen liegenden Bereich über, der das Zentrierteil bildet.

Ein Ausführungsbeispiel der Erfindung wird im Folgenden anhand der Zeichnung näher beschrieben. In der Zeichnung zeigen:
Fig. 1 einen axialen Schnitt durch einen in ein Lagergehäuse eingesetzten Radialwellendichtring,
Fig. 2 eine Vergrößerung des in Figur 1 umrandeten Bereichs A des Radialwellendichtringes und
Fig. 3 eine Vergrößerung des in Figur 1 umrandeten Bereichs B des Radialwellendichtrings.

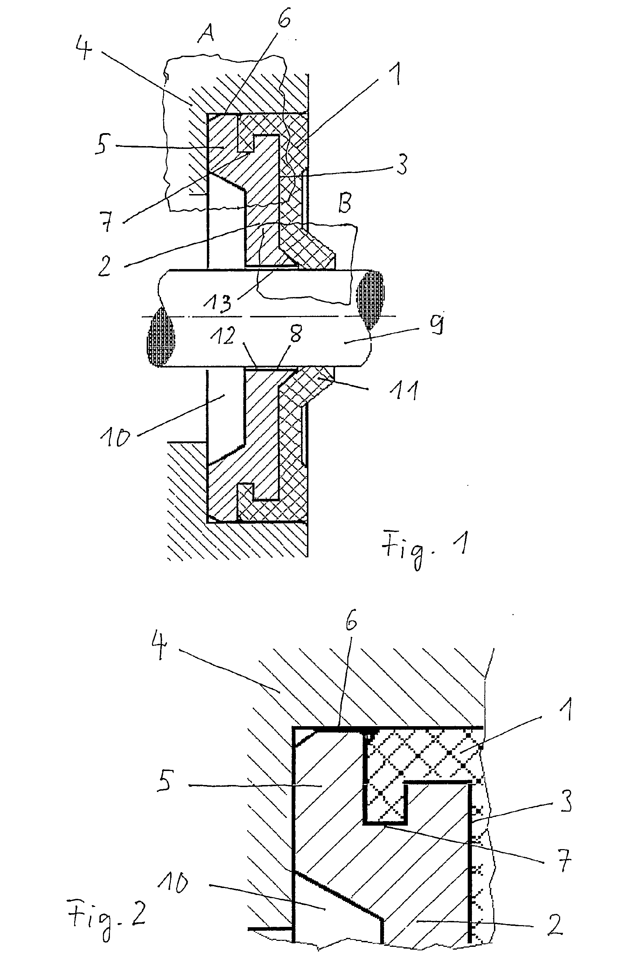

Wie aus Figur 1 hervorgeht, besteht der Radialwellendichtring aus einem Membrankörper 1 und einem Stützkörper 2, auf den der Membrankörper 1 mit einer Vorspannung aufgezogen ist. Der Membrankörper 1 und der Stützkörper 2 sind im wesentlichen scheibenförmig ausgebildet, wobei der Membrankörper 1 an einer Stirnseite 3 des Stützkörpers 2 anliegt.

Bei der in Figur 1 gezeigten Anordnung ist der Radialwellendichtring in ein Lagergehäuse 4 eingebaut, indem er an der Innenseite des Lagergehäuses 4 mit einer Presspassung anliegt. Zur Zentrierung des Radialwellendichtrings im Lagergehäuse 4 und metallischen Abdichtung gegenüber dem Lagergehäuse 4 weist der Stützkörper 2 ein Zentrierteil 5 mit einem radial außen liegenden Rand 6 auf, der an der radial innen liegenden Seite des Lagergehäuses 4 mit einer definierten Vorspannung anliegt.

Das Zentrierteil 5 ist durch einen an der vom Membrankörper 1 abgewandten Stirnseite nach außen gekröpften radial außen liegenden Bereich des Stützkörpers 2 gebildet. An der axial nach außen liegenden Stirnseite des Zentrierteils 5 liegt der Stützkörper 2 an einem radial einwärts gerichteten Bereich des Lagergehäuses 4 an.

Der Membrankörper 1 greift in eine an der radialen Außenseite des Stützkörpers 2 angeordnete Nut 7 ein, wodurch er gegenüber diesem axial festgelegt ist. Im nicht eingesetzten Zustand steht die radial nach außen weisende Umfangsfläche des Membrankörpers 1 gegenüber der radialen Umfangsfläche des nicht vom Membrankörper 1 überzogenen Zentrierteils 5 nach außen vor. Wird der Radialwellendichtring in ein Lagergehäuse 4 eingepresst, liegt der Membrankörper 1 an seiner radialen Außenseite ebenfalls unter einer definierten Vorspannung an der radial nach innen weisenden Seite des Lagergehäuses 4 an.

Beim Einpressen des Radialwellendichtrings in das Lagergehäuse wird durch das Zentrierteil 5 eine exakte Fixierung des Dichtrings im Lagergehäuse 4 erreicht und der Dichtring äußerst genau gegenüber der Wellenachse zentriert. Dadurch wird erreicht, dass der Dichtspalt 8 zwischen dem Stützkörper 2 und der Welle 9 ein über den gesamten Umfang gleiches Maß aufweist.

Der Stützkörper 2 und das Zentrierteil 5 sind als einstückiges Metalldrehteil ausgebildet. Aufgrund der Kröpfung dieses Teils wird eine an der vom Membrankörper 1 abgewandten Stirnseite des Stützkörpers 2 radial nach innen offene Ausnehmung 10 gebildet. Die metallische Abdichtung zwischen dem Zentrierteil 5 und dem Lagergehäuse 4 geht am besten aus der vergrößerten Darstellung der Figur 2 hervor.

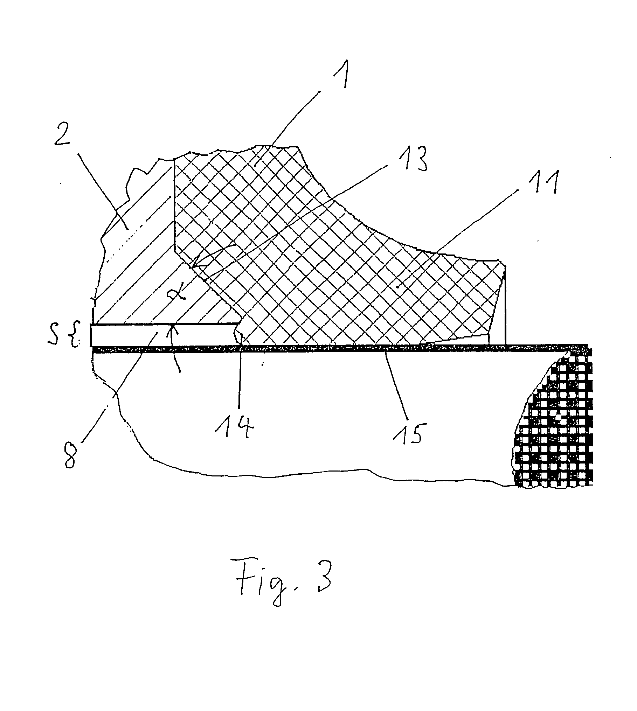

Wie aus Figur 1 und, in vergrößerter Darstellung, insbesondere aus Figur 3 hervorgeht, weist der Membrankörper 1 an seinem radial innen liegenden Ende eine vom Stützkörper 2 wegweisende schräg gestellte Dichtlippe 11 auf. Die Dichtlippe 11 liegt mit einer axial relativ kurzen Fläche an der Welle 9 an.

Zur Abstützung der Dichtlippe 11 weist der Stützkörper 2, an seinem radial innen liegenden Ende, der Dichtlippe 11 gegenüberliegend, eine zur Wandung 12 der Bohrung für die Welle 9 geneigte Stützfläche 13 auf.

Der Stellwinkel α der Stützfläche 13, d.h. der Winkel zwischen der Stützfläche 13 und der Wandung 12 der Bohrung für die Welle, in einer die Achse des Radialwellendichtrings einschließenden, zentralen Ebene liegend, beträgt 50° +/- 2°. Es hat sich herausgestellt, dass ein solcher Anstellwinkel eine optimale Druckunterstützung gewährleistet, indem das tribologische System im gesamten Drehzahl- und Druckbereich, der für den Betrieb des Radialwellendichtrings z.B. in einem Kompressor vorgesehen ist, weitestgehend ungestört ist, d.h., bei optimaler Dichtheit ein relativ geringer Reibungswiderstand aufrechterhalten bleibt.

Um weiterhin eine möglichst geringe Spaltextrusion 14 des elastomeren Materials des Membrankörpers 1 in dem Dichtspalt 8 bei hoher Materialverdichtung im Eintrittsbereich des Dichtspaltes zu erreichen, beträgt der Radius im Übergang zwischen der Stützfläche 13 und der Wandung 12 der Bohrung des Stützkörpers 2, in einer die Achse des Radialwellendichtringes enthaltenen Ebene liegend, 0,15 +/- 0,05 mm. Die Spaltbreite s beträgt hierbei 0,03 +/- 0,01 mm. Aufgrund der hohen Verdichtung des elastomeren Materials kann das in den Membrankörper 1 durch Diffusion eindringende CO₂ nur in einer äußerst geringen Menge, die weit unter den bestehenden Normen liegt, in den Dichtspalt eindringen und aus dem Kompressor entweichen. Die geringe Spaltextrusion 14 im Eingang des Dichtspaltes 8 ist insbesondere in Figur 3 gezeigt.

Das elastomere Material des Membranköpers 1, z.B. HMBR weist darin eingebettete MOS₂-Partikel mit einem relativ geringen Füllgrad von 5 % +/- 2 % auf. Dadurch wird die Anzahl der aus der Dichtlippe 11 bei hohen Drehzahlen des Kompressors austretenden Schmiermittelteilchen reduziert und das Aufschmieren einer Dichtspur 15 auf der Welle 9 weitestgehend vermieden, so dass die Dichtung im Bereich des Dichtspaltes 8 verbessert wird.

Um den Verschleiß bei zu hohen Torsionsspannungen bzw. Torsionswinkeln des Membrankörpers 1 bei hohen Drehzahlen des Kompressors zu vermeiden, wird ein relativ hart elastisches elastomeres Material mit einer Shore-A-Härte zwischen 90° und 95° verwendet.

### Bezugszeichenliste

- 1: Membrankörper
- 2: Stützkörper
- 3: Stirnseite
- 4: Lagergehäuse
- 5: Zentrierteil
- 6: Rand
- 7: Nut
- 8: Dichtspalt
- 9: Welle
- 10: Ausnehmung
- 11: Dichtlippe
- 12: Wandung
- 13: Stützfläche
- 14: Spaltextrusion
- 15: Dichtspur
- α: Anstellwinkel
- s: Breite des Dichtspalts

## Patentansprüche

1. Radialwellendichtring bestehend aus einem Membrankörper (1) und einem Stützkörper (2), an dem der Membrankörper (1) befestigt ist, wobei am Stützkörper (2) ein Zentrierteil (5) mit einem radial außen liegenden Rand (6) angeordnet ist, der vom Membrankörper (1) nicht überdeckt ist, der Membrankörper (1) an seinem radial innen liegenden Ende eine vom Stützkörper (2) weg weisende schräggestellte Dichtlippe (11) aufweist und der Stützkörper (2) eine axiale Bohrung für die Welle (8) und, der Dichtlippe (11) gegenüberliegend, eine zur Wandung (12) der Bohrung geneigte Stützfläche (13) aufweist, **dadurch ge-kennzeichnet**, dass das Zentrierteil (5) beim Einbau des Radialwellendichtrings in ein Lagergehäuse (4) an der Innenseite des Lagergehäuses (4) mit einer Presspassung anlegbar ist und der Winkel (α) zwischen der Stützfläche (13) und der Wandung (12) der Bohrung des Stützkörpers (2), in einer die Achse des Radialwellendichtrings enthaltenden, zentralen Ebene liegend, zwischen 45° und 55° beträgt.

2. Radialwellendichtring nach Anspruch 1, **dadurch gekennzeichnet, dass** der Winkel (α) zwischen der Stützfläche (13) und der Wandung (12) der Bohrung des Stützkörpers (2) zwischen 48° und 52° beträgt.

3. Radialwellendichtring nach Anspruch 1, **dadurch gekennzeichnet, dass** der Winkel zwischen der Stützfläche (13) und der Wandung (12) der Bohrung des Stützkörpers (2) zwischen 49° und 51° beträgt.

4. Radialwellendichtring nach einem der Ansprüche 1 bis 3, **dadurch gekennzeichnet, dass** der den Übergang zwischen der Stützfläche (13) und der Wandung (12) der Bohrung des Stützkörpers (2) bildende Radius, in einer die Achse des Radialwellendichtring enthaltenden, zentralen Ebene liegend, zwischen 0,1 und 0,3 mm beträgt.

5. Radialwellendichtring nach Anspruch 4, **dadurch gekennzeichnet, dass** der Radius zwischen 0,15 und 0,25 mm beträgt.

6. Radialwellendichtring nach Anspruch 4, **dadurch gekennzeichnet, dass** der Radius zwischen 0,1 und 0,2 mm beträgt.

7. Radialwellendichtring nach einem der Ansprüche 1 bis 6, **dadurch gekennzeichnet, dass** der Membrankörper (1) aus einem elastomeren Material besteht mit einem Füllgrad aus darin eingebetteten MOS₂ -Partikeln zwischen 3 % und 7 %.

8. Radialwellendichtring nach Anspruch 7, **dadurch gekennzeichnet, dass** der Füllgrad zwischen 3 % und 5 % beträgt.

9. Radialwellendichtring nach einem der Ansprüche 1 bis 7, **dadurch gekennzeichnet, dass** der Membrankörper (1) eine Shore-A-Härte zwischen 85° und 95° aufweist.

10. Radialwellendichtring nach Anspruch 9, **dadurch gekennzeichnet, dass** die Shore-A-Härte zwischen 90° und 95° beträgt.

11. Radialwellendichtring nach einem der Ansprüche 1 bis 10, **dadurch gekennzeichnet, dass** der Membrankörper auf den Stützkörper (2) aufgezogen ist und in eine an der radialen Außenseite des Stützkörper (2) angeordnete Nut (7) eingreift.

12. Radialwellendichtring nach einem der Ansprüche 1 bis 11, **dadurch gekennzeichnet, dass** das Zentrierteil (5) einstückig mit dem Stützkörper (2) ausgebildet ist.

13. Radialwellendichtring nach Anspruch 12, **dadurch gekennzeichnet, dass** der Stützkörper (2) und das Zentrierteil (5) als ein einstückiges Metalldrehteil ausgebildet sind.

14. Radialwellendichtring nach einem der Ansprüche 1 bis 13, **dadurch gekennzeichnet, dass** der Stützkörper (2) an der vom Membrankörper (1) abgewandten Stirnseite eine radial nach innen offene Ausnehmung (10) aufweist.

15. Radialwellendichtring nach Anspruch 14, **dadurch gekennzeichnet, dass** der Stützkörper (2) an der vom Membrankörper (1) abgewandten Stirnseite in einem axial nach außen gekröpften, radial außen liegenden Bereich übergeht, der das Zentrierteil (5) bildet.

## Claims

1. Radial shaft sealing ring, comprising a membrane body (1) and a supporting body (2), to which the membrane body (1) is fixed, where a centering element (5) having a radially outer edge (6) not covered by the membrane body (1) is located on the supporting body (2), the radially inner end of the membrane body (1) displays an inclined sealing lip (11) facing away from the supporting body (2), and the supporting body (2) displays an axial bore for the shaft (9) and, opposite the sealing lip (11), a supporting face (13) inclined towards the wall (12) of the bore, **characterized in that** the centering element (5) can be contacted with the inside of the bearing housing (4) in a press fit when installing the radial shaft sealing ring in a bearing housing (4), and the angle (α) between the supporting face (13) and the wall (12) of the bore of the supporting body (2), lying in a central plane that includes the axis of the radial shaft sealing ring, is between 45° and 55°.

2. Radial shaft sealing ring according to Claim 1, **characterized in that** the angle (α) between the supporting face (13) and the wall (12) of the bore of the supporting body (2) is between 48° and 52°.

3. Radial shaft sealing ring according to Claim 1, **characterized in that** the angle between the supporting face (13) and the wall (12) of the bore of the supporting body (2) is between 49° and 51°.

4. Radial shaft sealing ring according to one of Claims 1 to 3, **characterized in that** the radius forming the transition between the supporting face (13) and the wall (12) of the bore of the supporting body (2), which lies in a central plane including the axis of the radial shaft sealing ring, is between 0.1 and 0.3 mm.

5. Radial shaft sealing ring according to Claim 4, **characterized in that** the radius is between 0.15 and 0.25 mm.

6. Radial shaft sealing ring according to Claim 4, **characterized in that** the radius is between 0.1 and 0.2 mm.

7. Radial shaft sealing ring according to one of Claims 1 to 6, **characterized in that** the membrane body (1) is made of an elastomeric material with a filler content of between 3% and 7% MOS₂ particles embedded therein.

8. Radial shaft sealing ring according to Claim 7, **characterized in that** the filler content is between 3% and 5%.

9. Radial shaft sealing ring according to one of Claims 1 to 7, **characterized in that** the membrane body (1) has a Shore A hardness between 85° and 95°.

10. Radial shaft sealing ring according to Claim 9, **char** - **acterized in that** the Shore A hardness is between 90° and 95°.

11. Radial shaft sealing ring according to one of Claims 1 to 10, **characterized in that** the membrane body is mounted on the supporting body (2) and engages a groove (7) on the radial outer side of the supporting body (2).

12. Radial shaft sealing ring according to one of Claims 1 to 11, **characterized in that** the centering element (5) is designed in one piece with the supporting body (2).

13. Radial shaft sealing ring according to Claim 12, **characterized in that** the supporting body (2) and the centering element (5) are designed as a one-piece, turned metal part.

14. Radial shaft sealing ring according to one of Claims 1 to 13, **characterized in that**, on the face end pointing away from the membrane body (1), the supporting body (2) displays a recess (10) that is radially open towards the inside.

15. Radial shaft sealing ring according to Claim 14, **characterized in that** the face end of the supporting body (2) pointing away from the membrane body (1) transitions into a radially outer area that is axially cranked outwards and forms the centering element (5).

## Revendications

1. Bague d'étanchéité d'arbre radial, comprenant un corps de membrane (1) et un corps de support (2) auquel est fixé le corps de membrane (1), sur lequel corps de support (2) est arrangé un élément de centrage (5) ayant un bord (6) qui est situé radialement à l'extérieur est arrangé et qui n'est pas couvert du corps de membrane (1), ledit corps de membrane (1) ayant à son extrémité située radialement à l'intérieur une lèvre d'étanchéité inclinée et éloignée du corps de support (2), et le corps de support (2) ayant un alésage axiale pour l'arbre (8) et, opposé à la lèvre d'étanchéité (11), une surface de support (13) inclinée vers la paroi (12) de l'alésage , **caractérisée en ce que** lors de l'installation de la bague d'étanchéité d'arbre radial dans une boîte de palier (4) l'élément de centrage (5) peut être mis contre la face interne de la boîte de palier (4) au moyen d'ajustage serré, et que l'angle (α) entre la surface de support (13) et la paroi (12) de l'alésage du corps de support (2) dans un plan central incluant l'axe de la bague d'étanchéité d'arbre radial est entre 45° et 55°.

2. Bague d'étanchéité d'arbre radial selon la revendication 1, **caractérisée en ce que** l'angle (α) entre la surface de support (13) et la paroi (12) de l'alésage du corps de support (2) est entre 48° et 52°.

3. Bague d'étanchéité d'arbre radial selon la revendication 1, **caractérisée en ce que** l'angle (α) entre la surface de support (13) et la paroi (12) de l'alésage du corps de support (2) est entre 49° et 51 °.

4. Bague d'étanchéité d'arbre radial selon l'une des revendications 1 à 3, **caractérisée en ce que** le radius formant la jonction entre la surface de support (13) et la paroi (12) de l'alésage du corps de support (2) dans un plan central incluant l'axe de la bague d'étanchéité d'arbre radial est entre 0,1 et 0,3 mm.

5. Bague d'étanchéité d'arbre radial selon la revendication 4, **caractérisée en ce que** le radius est entre 0,15 et 0,25 mm.

6. Bague d'étanchéité d'arbre radial selon la revendication 4, **caractérisée en ce que** le radius est entre 0,1 et 0,2 mm.

7. Bague d'étanchéité d'arbre radial selon l'une des revendications 1 à 6, **caractérisée en ce que** le corps de membrane (1) comporte un matériel élastomère ayant un degré de remplissage en particules MOS₂ y encastrées entre 3% et 7%.

8. Bague d'étanchéité d'arbre radial selon la revendication 7, **caractérisée en ce que** le degré de remplissage est entre 3% et 5%.

9. Bague d'étanchéité d'arbre radial selon l'une des revendications 1 à 7, **caractérisée en ce que** le corps de membrane (1) a une dureté Shore A entre 85° et 95°.

10. Bague d'étanchéité d'arbre radial selon la revendication 9, **caractérisée en ce que** la dureté Shore A est entre 90° et 95°.

11. Bague d'étanchéité d'arbre radial selon l'une des revendications 1 à 10, **caractérisée en ce que** le corps de membrane est monté sur le corps du support (2) et engage dans une rainure (7) arrangée sur le côté radialement à l'extérieur du corps de support (2).

12. Bague d'étanchéité d'arbre radial selon l'une des revendications 1- à 11; **caractérisée en ce que** l'élément de centrage (5) est formé en une partie avec le corps du support (2).

13. Bague d'étanchéité d'arbre radial selon la revendication 12, **caractérisée en ce que** le corps du support (2) et l'élément de centrage (5) sont formés comme un élément monobloc en métal tourné.

14. Bague d'étanchéité d'arbre radial selon l'une des revendications 1 à 13, **caractérisée en ce que** le corps du support (2) comporte, à son front détourné du corps de membrane (1), un creux (10) qui est ouvert radialement vers l'intérieur.

15. Bague d'étanchéité d'arbre radial selon la revendication 14, **caractérisée en ce que** sur le front détourné du corps de membrane (1) le corps du support (2) se change en une région coudée vers l'extérieur et située radialement à l'extérieur, qui forme l'élément de centrage (5).
